# EUROPÄISCHE PATENTSCHRIFT

(11) **EP 2 857 139 B1**
(45) Veröffentlichungstag und Bekanntmachung des Hinweises auf die Patenterteilung: **25.05.2016**
(21) Anmeldenummer: 14179121.0
(22) Anmeldetag: 30.07.2014
(51) Int. Cl.: B23K 26/08, B22F 3/105, B23K 26/14, B23K 26/16, B23K 26/34, B23K 26/30, C21D 9/00

(54) **Vorrichtung zur Laser-Materialbearbeitung mit einem entlang einer Raumrichtung beweglichen Laserkopf**
Device for laser processing materials with a laser head movable along a space direction
Dispositif de traitement laser de matériau avec une tête laser déplaçable dans l'espace

(30) Priorität: 04.09.2013 DE 102013217598
(43) Veröffentlichungstag der Anmeldung: 08.04.2015
(73) Patentinhaber: MTU Aero Engines AG, 80995 München (DE)
(72) Erfinder: Liebl, Christian, 85461 Bockhorn (DE); Schlothauer, Steffen, 85253 Erdweg (DE)

(56) Entgegenhaltungen:
- DE-A1- 19 953 000
- DE-A1-102010 018 686
- JP-A- 2001 301 045
- JP-A- 2013 075 308
- US-A1- 2003 052 105
- US-A1- 2010 233 012

## Beschreibung

Die vorliegende Erfindung betrifft eine Vorrichtung zur Laser - Materialbearbeitung gemäß dem Oberbegriff des Anspruchs 1 (siche, z.B., US 2003/052105 A), bzw. eine Vorrichtung zum selektiven Laserschmelzen oder Lasersintern.

### STAND DER TECHNIK

Generative Herstellungsverfahren zur Herstellung eines Bauteils, wie beispielsweise selektives Laserschmelzen, selektives Lasersintern oder Laserauftragsschweißen werden in der Industrie für das sogenannte rapid tooling, rapid prototyping oder auch für die Herstellung von Serienprodukten im Rahmen des rapid manufacturing eingesetzt. Insbesondere können derartige Verfahren auch zur Herstellung von Turbinenteilen, insbesondere von Teilen für Flugtriebwerke eingesetzt werden, bei denen beispielsweise aufgrund auf Grund des verwendeten Materials derartige generative Herstellungsverfahren vorteilhaft sind. Ein Beispiel hierfür findet sich in der DE 10 2010 050 531 A1.

Darüber hinaus werden Laser auch in vielen anderen Anwendungsfällen bei der Materialbearbeitung zum Aufschmelzen oder einfach nur Erwärmen von Materialien eingesetzt. Bei allen diesen Verfahren kann es durch die Wärmeeinbringung zur sogenannten Schmauchbildung, also zur Bildung von Verbrennungsgasen, von verdampftem Material und dergleichen kommen, was die weitere effiziente Einkopplung von Laserlicht in das zu bearbeitende Material verhindern kann. Aus diesem Grund ist es bereits bekannt, im Bereich des Bearbeitungsfeldes des Lasers einen laminaren Gasfluss einzustellen, um mittels des Gasflusses entstandenen Schmauch abführen zu können.

Ferner kann es bei der Verwendung von Umlenkspiegeln für das Abtasten (Scannen) bzw. Überstreichen des Bearbeitungsfeldes mit dem Laserstrahl zu unerwünschten Verzerrungen der Strahlform kommen, welche abhängig von der gewünschten Genauigkeit und Ortsauflösung der Materialbearbeitung zu unerwünschten Effekten führen können.

Eine weitere Problematik besteht bei der Lasermaterialbearbeitung auch darin, dass es durch das schnelle Aufheizen und Aufschmelzen sowie das Abkühlen der erwärmten bzw. aufgeschmolzenen Bereiche zu Eigenspannungen und zur Rissbildung kommen kann.

### OFFENBARUNG DER ERFINDUNG

gemäß dem Oberbegriff des Anspruch 1 (siehe, z.B., US 2003/052105 A),

### AUFGABE DER ERFINDUNG

Es ist deshalb Aufgabe der vorliegenden Erfindung, eine Vorrichtung bereitzustellen, die die Probleme des Standes der Technik vermeiden oder zumindest verringern kann und insbesondere einen unverzerrten Laserstrahl für das Scannen eines zu bearbeitenden Bereichs bereitstellen kann. Außerdem sollen mit der Vorrichtung auf - oder umgeschmolzene Bereiche spannungsarm und rissfrei erstarren sowie die eingesetzte Energie des Laserstrahls effizient genutzt werden.

### TECHNISCHE LÖSUNG

Diese Aufgabe wird gelöst durch eine Vorrichtung mit den Merkmalen des Anspruchs 1. Vorteilhafte Ausgestaltungen sind Gegenstand der abhängigen Ansprüche.

Die Erfindung schlägt vor, einen mindestens entlang einer Raumrichtung beweglichen Laserkopf vorzusehen, der über ein zu bearbeitendes Material bewegt werden kann und mit einem Lichtleiter mit der Laserstrahlerzeugungseinheit des Lasers verbunden ist. Statt den Laserstrahl durch Umlenkspiegel über eine Bearbeitungsfläche zu führen, wird der Laserkopf über die Bearbeitungsfläche geführt, der den Laserstrahl unmittelbar aus einem Lichtleiter abgibt, so dass Formverzerrungen des Laserstrahls vermieden werden können.

Der Laserkopf ist gemäß der Erfindung entlang mindestens zweier, zueinander unabhängiger Raumrichtung translatorisch bewegbar ausgebildet, so dass der Laserkopf beispielsweise innerhalb oder entlang einer Ebene bewegbar ist. Damit kann mit dem beweglichen Laserkopf jeder Punkt einer zu bearbeitenden Fläche insbesondere beim selektiven Laserschmelzen oder Lasersintern erreicht werden.

Ein beweglicher Laserkopf bietet darüber hinaus den Vorteil, dass an dem Laserkopf zuätzliche Einrichtungen vorgesehen werden können, wie gemäß der Erfindung eine Absaugvorrichtung für Schmauch und dergleichen und eine Temperiereinrichtung zum Vor und Nachwärmen bzw. auch Kühlen des bearbeiteten Bereichs.

Die Absaugvorrichtung ist gemäß der Erfindung so ausgeführt, dass sie einen Absaugstrom parallel zur Laserstrahlrichtung und insbesondere einen Absaugstrom versetzt zum Laserstrahl erzeugt, so dass unerwünschte Bestandteile in der Atmosphäre oberhalb des zu bearbeitenden Materials, wie beispielsweise Schmauch, entfernt werden kann, ohne den Laserstrahl weiter zu beeinträchtigen.

Eine Temperiereinrichtung enthält gemäß der Erfindung eine Induktionsspule. Mit der Temperiereinrichtung ist eine lokale Vor und Nachbehandlung hinsichtlich einer Temperaturbehandlung zeitlich vor bzw nach dem mit dem Laserstrahl bearbeiteten Bereich möglich, so dass Spannungen und Risse in dem behandelten Material vermieden bzw. verringert werden können.

Die Vorrichtung zur Laser - Materialbearbeitung kann insbesondere bei einer Vorrichtung zum selektiven Laserschmelzen oder selektiven Lasersintern zum Einsatz kommen.

### KURZBESCHREIBUNG DER FIGUREN

Die beigefügten Zeichnungen zeigen in rein schematischer Weise in
- Fig. 1: eine schematischen Darstellung einer Vorrichtung zum selektiven Laserschmelzen; und in
- Fig. 2: eine perspektivische Detailansicht der Ausführungsform der Fig. 1.

### AUSFÜHRUNGSBEISPIELE

Weitere Vorteile, Kennzeichen und Merkmale der vorliegenden Erfindung werden bei der nachfolgenden detaillierten Beschreibung eines Ausführungsbeispiels deutlich, wobei die Erfindung nicht auf dieses Ausführungsbeispiel beschränkt ist.

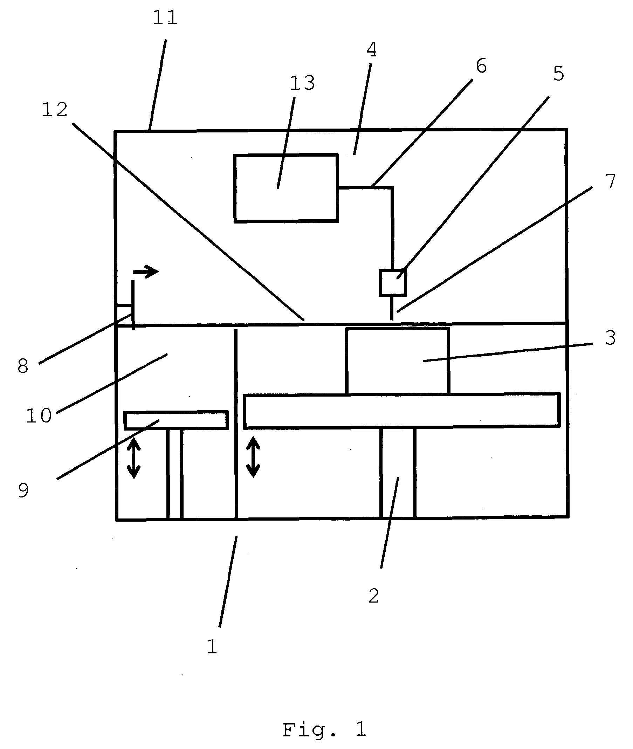

Die Figur 1 zeigt in einer rein schematischen Darstellung eine Vorrichtung 1, wie sie für das selektive Laserschmelzen zur generativen Herstellung eines Bauteils Verwendung finden kann. Die Vorrichtung 1 umfasst einen Hubtisch 2, auf dessen Plattform ein Halbzeug 3 angeordnet ist, auf dem schichtweise Material abgeschieden wird, um ein dreidimensionales Bauteil zu erzeugen. Hierzu wird mittels des Schiebers 8 Pulver 10, das sich oberhalb eines Hubtisches 9 in einem Pulvervorrat befindet, schichtweise über das Halbzeug 3 geschoben und anschließend durch den Laserstrahl 7 eines Lasers 4 durch Aufschmelzen oder Sintern mit dem bereits vorhandenen Halbzeug 3 verbunden. Die Verbindung des Pulvermaterials in einer Pulverschicht mit dem Halbzeug 3 erfolgt durch den Laserstrahl 7 abhängig von der gewünschten Kontur des zu fertigenden Bauteils, sodass beliebige, dreidimensionale Formen erzeugt werden können. Um unerwünschte Reaktionen mit der Umgebungsatmosphäre beim Aufschmelzen oder Sintern zu vermeiden, findet der Prozess in einem abgeschlossenen Raum, der durch ein Gehäuse 11 der Vorrichtung 1 bereit gestellt wird, statt und es wird zudem eine inerte Gasatmosphäre bereit gestellt, um beispielsweise Oxidation des Pulvermaterials beim Abscheiden und dergleichen zu vermeiden. Als inertes Gas kann beispielsweise Stickstoff verwendet werden, welches über eine Gasversorgung bereit gestellt wird.

Der Laser 4 weist erfindungsgemäß einen Laserkopf 5 auf, der entlang einer Ebene parallel zur Bearbeitungsebene 12 des Bauraums zweidimensional bewegbar ist. Der Laserkopf 5 ist über eine Leitung 6 mit der ortsfesten Laserstrahlerzeugungseinheit 13 verbunden, wobei die Leitung 6 neben einem Lichtleiter zur Leitung des Laserstrahls von der Laserstrahlerzeugungseinheit 13 zum Laserkopf 5 auch Versorgungs - und Steuerungsleitungen umfasst, um den Laserkopf 5 mit Energie zu versorgen und für die gewünschte Bewegung entsprechend ansteuern zu können.

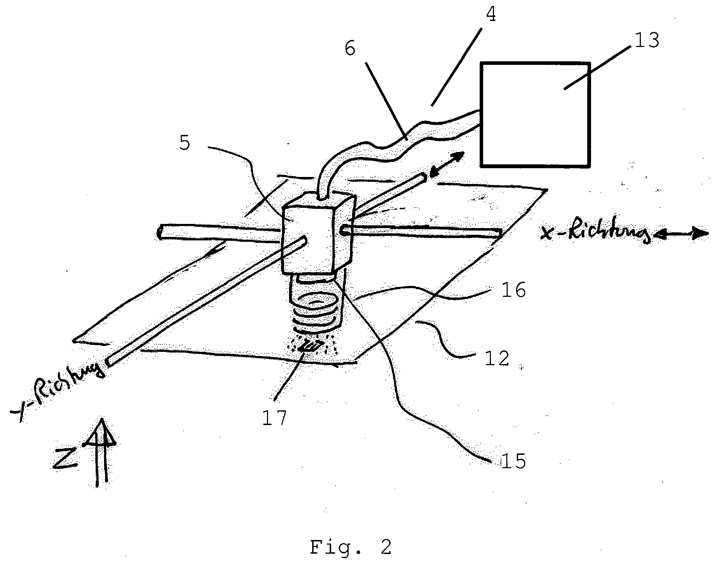

Die Fig. 2 zeigt in einer perspektivischen Darstellung den Laserkopf 5 der Vorrichtung 1 aus Fig. 1, wobei wiederum die stationäre Laserstrahlerzeugungseinheit 13 mit der flexiblen Verbindungsleitung 6 für den Laserkopf 5 gezeigt ist. Der Laserkopf 5 ist gemäß der Darstellung der Fig. 2 entlang der Raumrichtungen X und Y oberhalb der Bearbeitungsebene 12 beweglich. Der in der Fig. 2 nicht näher dargestellte Laserstrahl erzeugt in der Bearbeitungsebene 12 einen Bestrahlungs - bzw. Aufschmelzbereich 17, in dem das Pulvermaterial örtlich selektiv zur Bildung eines dreidimensionalen Gegenstandes aufgeschmolzen wird. Die Richtung, in der das Bauteil schichtweise aufgebaut wird, ist durch den Pfeil mit der Z-Richtung angegeben.

Der Laserkopf 5 umfasst eine Induktionsspule 16, die als Heizeinrichtung vorgesehen ist, um den Bereich um den Aufschmelzbereich 17 vor bzw nachzuwärmen.

Neben der Induktionsspule 16 zur induktiven Heizung weist der Laserkopf 5 zusätzlich eine Absaugvorrichtung 15 auf, mit der Gas aus dem Bereich zwischen der Bearbeitungsebene 12 und dem Laserkopf 5 aufgesaugt werden kann. An dem Aufschmelzbereich 17 kann durch die Wärmeeinbringung durch den Laserstrahl Schmauch entstehen, der die ungehinderte Einbringung der Laserstrahlleistung in das Pulver in der Bearbeitungsebene 12 verhindern könnte. Über die Absaugvorrichtung 15 kann der Schmauch unmittelbar direkt am Aufschmelzbereich 17 aufgesaugt werden, so dass eine Schwächung des Laserstrahls durch den Schmauch vermieden bzw. abgeschwächt werden kann. Durch eine ringförmige Absaugung um den Laserstrahl herum kann eine Beeinträchtigung des Laserstrahls durch den abgesaugten Schmauch weitgehend verhindert werden.

Durch die Vorwärmung bzw. Nachwärmung des aufgeschmolzenen Materials mit der Induktionsspule kann die Rissbildung des bearbeiteten Materials durch zu schnelles Aufschmelzen und Abkühlen vermieden werden.

Da der Laserkopf 5 durch translatorische Bewegungen entlang der X-Richtung und der Y-Richtung an jeden Punkt oberhalb der Bearbeitungsebene 12 bewegt werden kann, so dass direkt darunter der Laserstrahl entsprechend das Pulvermaterial aufschmelzen kann, kann jede beliebige Form eines Bauteils schichtweise aufgebaut werden. Da der Laserkopf 5 den Laserstrahl aus einem Lichtleiter empfängt und unmittelbar oberhalb des Aufschmelzbereichs 17 abgibt, wird der Strahl nicht durch Ablenkspiegel in seiner Form verändert, beispielsweise ellipsoid verzehrt.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, solange der Schutzbereich der beigefügten Ansprüche nicht verlassen wird.

## Patentansprüche

1. Vorrichtung zur Laser - Materialbearbeitung mit einem Laser (4) zur Erzeugung eines Laserstrahls und einem beweglichen Laserkopf (5), wobei der Lazerkopf (5)
- entlang mindestens zweier, zueinander unabhängiger Raumrichtungen translatorisch und innerhalb oder entlang einer Ebene (12) bewegbar ist,
- über einen Lichtleiter mit dem Laser verbunden ist und einen Laserstrahl (7) abgibt, mit dem ein Material bearbeitet werden kann,
**dadurch gekennzeichnet, dass** der Laserkopf (5) :
- eine Absaugvorrichtung (15) umfasst, die einen Absaugstrom parallel zur Laserstahlrichtung erzeugt,
und
- die Vorrichtung als Temperiereinrichtung (16) eine Induktionsspule umfasst.

2. Vorrichtung nach Anspruch 1,
**dadurch gekennzeichnet, dass**
der Laser (4) ein Faserlaser ist.

3. Vorrichtung nach Anspruch 1 oder 2,
**dadurch gekennzeichnet, dass**
die Absaugvorrichtung (15) einen Absaugstrom versetzt, insbesondere konzentrisch zum Laserstrahl erzeugt.

4. Vorrichtung nach einem der vorhergehenden Ansprüche,
**dadurch gekennzeichnet, dass**
die Induktionsspule (16) um den Laserstrahl, insbesondere konzentrisch um den Laserstrahl angeordnet ist.

5. Vorrichtung nach einem der Ansprüche 1 bis 4 zur Verwendung in einer Vorrichtung zum selektiven Laserschmelzen oder selektiven Lasersintern.

6. Vorrichtung zum selektiven Laserschmelzen oder selektiven Lasersintern umfassend eine Vorrichtung gemäß einem der Ansprüche 1 bis 4.

## Claims

1. Device for laser material processing having a laser (4) to generate a laser beam and a moveable laser head (5), wherein the laser head (5)
- can be moved along at least two spatial directions which are independent of each other in a translational manner and within or along a plane (12),
- is connected to the laser via a light conductor and emits a laser beam (7) with which a material can be processed,
**characterised in that**
the laser head (5)
- comprises a suction device (15) which generates a suction flow parallel to the laser beam direction,
and
- the device comprises an induction coil as a tempering device (16).

2. Device according to claim 1.
**characterised in that**
the laser (4) is a fibre laser.

3. Device according to claim 1 or 2,
**characterised in that**
the suction device (15) moves a suction flow, in particular generates it concentrically to the laser beam.

4. Device according to one of the preceding claims,
**characterised in that**
the induction coil (16) is arranged around the laser beam, in particular concentrically around the laser beam.

5. Device according to one of claims 1 to 4 for use in a device for selective laser melting or selective laser sintering.

6. Device for selective laser melting or selective laser sintering comprising a device according to one of claims 1 to 4.

## Revendications

1. Dispositif d'usinage au laser d'un matériau, comprenant un laser (4) permettant de produire un faisceau laser et une tête laser (5) mobile, la tête laser (5)
- étant mobile en translation le long d'au moins deux directions spatiales indépendantes l'une de l'autre et à l'intérieur ou le long d'un plan (12),
- état reliée au laser par l'intermédiaire d'un guide de lumière et délivrant un faisceau laser (7) au moyen duquel un matériau peut être usiné, **caractérisé en ce que** la tête laser (5) :
- comprend un dispositif d'aspiration (15) qui produit un courant d'aspiration parallèle à la direction du faisceau laser,
et
- le dispositif comprenant une bobine d'induction utilisée comme dispositif de thermorégulation (16).

2. Dispositif selon la revendication 1, **caractérisé en ce que** le laser (4) est un laser à fibres.

3. Dispositif selon la revendication 1 ou 2, **caractérisé en ce que** le dispositif d'aspiration (15) produit un courant d'aspiration décalé du faisceau laser, en particulier concentrique par rapport à ce dernier.

4. Dispositif selon l'une quelconque des revendications précédentes, **caractérisé en ce que** la bobine d'induction (16) est disposée autour du faisceau laser, en particulier de manière concentrique autour du faisceau laser.

5. Dispositif selon l'une quelconque des revendications 1 à 4 destiné à être utilisé dans un dispositif de fusion sélective par laser ou de frittage sélectif par laser.

6. Dispositif de fusion sélective par laser ou de frittage sélectif par laser comprenant un dispositif selon l'une quelconque des revendications 1 à 4.
